# EUROPÄISCHE PATENTSCHRIFT

(11) **EP 0 562 264 B1**
(45) Veröffentlichungstag und Bekanntmachung des Hinweises auf die Patenterteilung: **07.05.1997**
(21) Anmeldenummer: 93102455.8
(22) Anmeldetag: 17.02.1993
(51) Int. Cl.: B60B 33/02

(54) **Von Hand bewegbarer Transportwagen**
Hand-driven transport carriage
Chariot de transport avec commande à main

(30) Priorität: 26.03.1992 DE 9204062 U; 28.10.1992 DE 9214634 U; 28.01.1993 DE 9301138 U
(43) Veröffentlichungstag der Anmeldung: 29.09.1993
(73) Patentinhaber: Wanzl GmbH & Co. Entwicklungs-KG, D-89336 Leipheim (DE)
(72) Erfinder: Wanzl, Rudolf, W-8874 Leipheim (DE); Eberlein, Herbert, W-8871 Bubesheim (DE)

(56) Entgegenhaltungen:
- EP-A- 0 370 716
- EP-A- 0 424 233
- EP-A- 0 424 234
- GB-A- 2 222 362

## Beschreibung

Die Erfindung betrifft einen von Hand bewegbaren Transportwagen, mit einem Fahrgestell, das an seiner Vorderseite wenigstens eine Lenkrolle und an seiner Rückseite zwei Lenkrollen trägt, wobei jede Lenkrolle mit einer Radgabel ausgestattet ist, die ein um eine horizontale Achse drehbares Rad aufweist, und jede Radgabel um eine vertikale Achse drehbar mit einem einer jeden Lenkrolle angehörenden, zum Befestigen am Transportwagen vorgesehenen Lagerkörper verbunden ist, wobei entweder die wenigstens eine an der Vorderseite oder die an der Rückseite des Fahrgestelles angeordneten Lenkrollen durch je eine lösbare Lenkarretierung beeinflußbar sind und zu diesem Zweck jede dieser Lenkrollen mit einem an der Radgabel angeordneten, ein Rastteil aufweisenden Rastmechanismus ausgestattet ist und diese Rastmechanismen auf die wechselnde Laufrichtung der Räder reagieren und jedes Rastteil in einer ihm zugeordneten Falle dann lösbar eingerastet ist, wenn sich die Räder in Schieberichtung des Transportwagens bewegen (siehe zum Beispiel EP-A-0 424 234).

In den Patentschriften EP 0 370 716 und EP 0 424 234 sind mit Lenkarretierungen ausgestattete Lenkrollen beschrieben. Bei diesen Lenkrollen ist der Rastmechanismus an den schwenkbaren Radgabeln angeordnet, während die Falle einer jeden Lenkrolle am Lagerkörper vorgesehen ist. In angeschraubtem Zustand der Lenkrollen sind deren Lagerkörper ortsfest mit dem Fahrgestell verbunden, so daß jede Falle, dem vorgesehenen Zweck entsprechend, in Nachlaufrichtung der Lenkrollen starr angeordnet ist. In der Patentschrift EP 0 424 233 A1 wird eine mit einer Lenkarretierung ausgestattete Lenkrolle beschrieben, deren Rastmechanismus an einem festen Element der beweglichen Achse angebracht ist. Läßt man bei dieser Lenkrolle die Falle weg, so liegt keine funktionsfähige Lenkrolle mehr vor.
Die bisher auf dem Markt erschienenen Lenkrollen orientieren sich zusätzlich an jener Bauweise, wie sie in der DE-23 33 199 C3 beschrieben ist. Bei diesen Lenkrollen ist der Lagerkörper am oberen Ende zu einem Flansch in Form einer vertikal stehenden Platte weiterentwickelt und mit einem zur Aufnahme eines Schraubmittels vorgesehenen Durchbruch ausgestattet, so daß sich die Lenkrollen mit Hilfe des Flansches am Fahrgestell des Transportwagens anschrauben lassen. Die Erfordernis eines flanschartigen Lagerkörpers reduziert natürlich die Möglichkeit, solche Lenkrollen an den verschiedensten Transportwagen anzubringen, auf ein sehr geringes Maß. Bei den meisten Transportwagen sind die für die Lenkrollen vorgesehenen Anschraubstellen so konstruiert, daß sich der Flansch des Lagerkörpers der eben beschriebenen Lenkrolle überhaupt nicht an den Anschraubstellen befestigen läßt. Dies ist ein entscheidender Nachteil, da bei weitem nicht alle bekannten Transportwagen mit den eben beschriebenen Lenkrollen ausgerüstet, sondern vielfach mit solchen Lenkrollen ausgestattet werden, die keine Lenkarretierungen aufweisen. Ein wahlweises Abändern der Anschraubstellen an den Transportwagen, einmal passend für Lenkrollen mit, und das andere Mal geeignet für Lenkrollen ohne Lenkarretierung kann aus Kosten- und Lagerhaltungsgründen nicht akzeptiert werden.

Die Aufgabe der Erfindung besteht darin, einen gattungsgemäßen Transportwagen so weiterzuentwickeln, daß die eben genannten Nachteile vermieden werden.

Die Lösung der Aufgabe besteht darin, daß jede Falle als eigenständiges Teil und gegen Verdrehen gesichert lösbar am Fahrgestell abgestützt ist.

Der Vorteil der Erfindung besteht darin, daß die für die Lenkrollen vorgesehenen Anschraubstellen am Transportwagen unverändert bleiben können. Da die Fallen ohnehin nur relativ kleine Bauteile sind, ist es kostengünstiger, die Fallen den jeweils unterschiedlichen Anschraubstellen anzupassen, als umgekehrt in kostenintensiver Weise die gewöhnlich als Schweißverbindungen gestalteten Anschraubstellen einer einzigen Sorte von Fallen anzugleichen.

Bei einem ersten Ausführungsbeispiel sind die Fallen als Blechteile vorgesehen, die so geformt oder gestaltet sind, daß sie oberhalb der Lenkrollen formschlüssig und gegen Verdrehen gesichert aufsetzbar sind. In vorteilhafter Weise werden sie mit den gleichen Befestigungsmitteln, die zum Anschrauben der Lenkrollen erforderlich sind, ortsfest am Fahrgestell befestigt.

Ein weiteres bevorzugtes Ausführungsbeispiel schlägt vor, die Fallen aus elastischem Kunststoff zu fertigen und diese so zu gestalten, daß sie auch die Funktion als Stoßdämpfer wahrnehmen können.

Schließlich ist es möglich, die Fallen in zweckmäßiger Weise als haubenförmige, zylindrische Teile zu gestalten, die sich, aus metallischem Material gefertigt, am Lagerkörper der Lenkrollen abstützen und von oben her das Lagergehäuse der Lenkrollen umgreifen. Dadurch ist es möglich, die Wandstärke der Fallen sehr gering zu halten, so daß die Rastteile beim Ein- und Ausrasten nur ganz kleine Wege zurücklegen müssen. Dadurch verringern sich auch die Rollwege der Lenkrollen mit der Folge, daß zum Ein- und Ausrasten der Rastteile aus den Fallen der Transportwagen nur geringfügig, ja fast unmerklich geschoben oder gezogen zu werden braucht. Das Hantieren und Steuern des Transportwagens ist dadurch sehr bequem. Auch läßt sich ein eigenständiger Stoßring auf jeder Falle aufsetzen.

Die Erfindung wird anhand von Ausführungsbeispielen näher erläutert. Es zeigt
- Fig. 1: einen Transportwagen in der bevorzugten Form eines Einkaufswagens;
- Fig. 2: ein teilweise geschnittenes Detail des Transportwagens mit einer Lenkrolle und einer einlegbaren Falle;
- Fig. 3: eine Falle gemäß Fig. 2 in räumlicher Darstellung;
- Fig. 4: ein teilweise geschnittenes Detail des Transportwagens mit einer Lenkrolle und einer als Stoßring oder Stoßdämpfer gestalteten Falle;
- Fig. 5: das in Fig. 4 gezeigte Detail in einer Draufsicht;
- Fig. 6: ein teilweise geschnittenes Detail des Transportwagens mit einer Lenkrolle und einer als haubenförmiges Teil gestalteten Falle, sowie
- Fig. 7: ein Rastteil in räumlicher Darstellung.

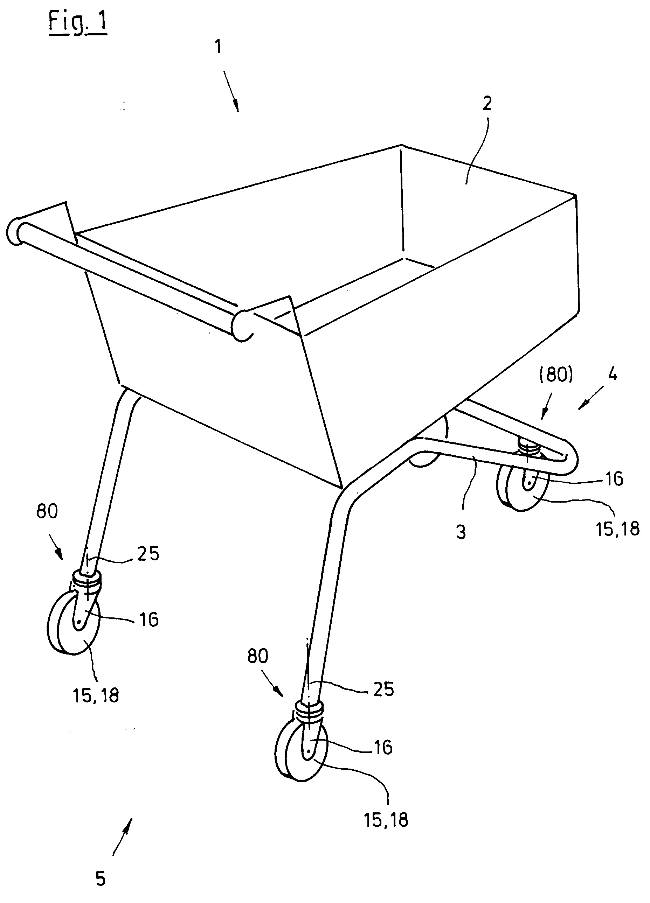

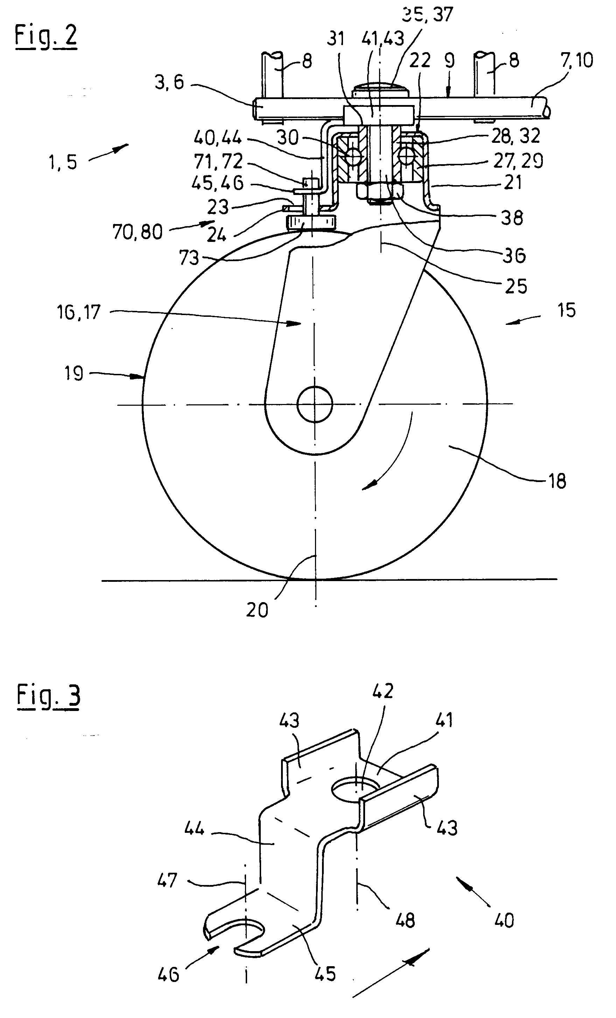

Ausgehend vom eingangs genannten Stand der Technik steht der in Fig. 1 als typischer Einkaufswagen dargestellte Transportwagen 1 stellvertretend für alle möglichen von Hand bewegbaren Transportwagen 1, die im Sinne der Neuerung als gattungsgerecht einstufbar sind. So sind Transportwagen 1 mit oder ohne Körbe 2, Behälter oder dergleichen ebenso denkbar, wie reine Plattformwagen oder Kofferkulis. Alle diese Transportwagen 1 weisen jedoch ein Fahrgestell 3 auf, das an seiner Vorderseite 4 wenigstens eine Lenkrolle 15 und an seiner Rückseite 5 mit zwei Lenkrollen 15 ausgestattet ist. Die Fahrgestelle 3 sind gewöhnlich aus Rohren, wie gezeigt, oder, wie in Fig. 2 angedeutet, aus Draht gefertigt. Jede Lenkrolle 15 -siehe nachfolgende Figuren- ist in bekannter Weise mit einer um eine vertikale Achse 25 verschwenkbaren, ein Rad 18 tragenden Radgabel 16 ausgestattet. Jede Radgabel 16, siehe Figur 2, ist mittels wenigstens einem Lagerelement 26, beispielsweise mit einem Rillenkugellager 27 oder mit einzelnen Kugeln 30, mit einem Lagerkörper 32 drehbar verbunden Der Lagerkörper 32 ist zum Anschrauben an das Fahrgestell 3 des Transportwagens 1 bestimmt. In dieser Lage ist der Lagerkörper 32 ortsfest mit dem Fahrgestell 3 verbunden. Im Beispiel nach Fig. 2 kann das Rillenkugellager 27 gleichzeitig auch als Lagerkörper 32 betrachtet werden. Typische Beispiele solcher Lenkrollen 15 sind in der EP-A-0 424 234 aufgeführt. Beim dargestellten Transportwagen 1 sind entweder die wenigstens eine vordere, oder die hinteren Lenkrollen 15 durch lösbare Lenkarretierungen 80 beeinflußbar, wie dies auch aus der EP-A-0 370 716 hervorgeht.

Das in Fig. 2 dargestellte Detail zeigt einen der beiden an der Rückseite 5 befindlichen seitlichen Abschnitte 6 des Fahrgestelles 3 eines Transportwagens 1. Mit der Positionszahl 7 sind zwei horizontal und auf Abstand angeordnete, in der Zeichnung deckungsgleiche Drähte dargestellt, die einen der beiden Seitenrahmen des Fahrgestelles 3 angehören. Die Drähte 7 sind durch zwei senkrechte, in ihrer Bedeutung nicht näher beschriebene vertikale Stäbe 8 getrennt. Die Zeichnung zeigt die Lenkrolle 15 teilweise geschnitten. Eine Radgabel 16 trägt ein Rad 18, das auf einer horizontalen Achse 20 drehbar gelagert ist. Die Gabelschenkel 17 der Radgabel 16 münden nach oben in ein zylindrisches Lagergehäuse 21, das ein Rillenkugellager 27 beherbergt. Das Rillenkugellager 27 wird von einer Schraube 35 durchdrungen, die sich mit ihrem Kopf 37 an der Oberseite 9 der Drähte 7 abstützt, während eine am unteren Ende der Schraube 35 aufgeschraubte Mutter 38 für die ortsfeste Anordnung der Lenkrolle 15 am Fahrgestell 3 sorgt. Der Innenring 28 des Rillenkugellagers 27, der über die obere Begrenzung 22 des Lagergehäuses 21 hinausragt, ist als ein Lagerkörper 32 zu betrachten, der in angeschraubtem Zustand der Lenkrolle 15 ortsfest, also nicht drehbar gegen das Fahrgestell 3 gepreßt wird. Mit Hilfe der Kugeln 30 des Rillenkugellagers 27 läßt sich somit der Außenring 29 des Rillenkugellagers 27 und damit das Lagergehäuse 21 samt der an das Lagergehäuse 21 angeformten Radgabel 16 um die vertikale Achse 25 verschwenken. Man kann auch das gesamte Rillenkugellager 27 als einen Lagerkörper 32 betrachten. Zwischen der unteren Begrenzung der Drähte 7, also an der Unterseite des Fahrgestelles 3, und der oberen Begrenzungsfläche 31 des Innenringes 28 des Rillenkugellagers 27 und auf den Innenring 28 aufgesetzt ist eine als ein Blechformteil gestaltete Falle 40 eingespannt, die gleichzeitig als eigenständiges Teil auch die Funktion einer Beilagscheibe für die Lenkrolle 15 ausübt. Die Falle 40 - siehe auch Fig. 3 - weist einen ersten horizontalen Abschnitt 41 auf, der mittig mit einem Durchbruch 42 ausgestattet ist. Durch den Durchbruch 42 führt der Schaft 36 der Schraube 35. Der erste Abschnitt 41 besitzt zu beiden Seiten zwei nach oben gerichtete Schenkel 43, die sich in montiertem Zustand der Falle 40 an die Außenseiten 10 der beiden Drähte 7 anschmiegen, so daß die Falle 40 nicht um die vertikale Achse 25 (Schwenkachse) der Lenkrolle 15 verdreht werden kann. Ein beispielsweise senkrechter Abschnitt 44 führt vom ersten horizontalen Abschnitt 41 nach unten zu einem zweiten horizontalen Abschnitt 45, der an seinem Ende einen Einschnitt 46 aufweist, der sich parallel zur Längsrichtung des Transportwagens 1 erstreckt. Der zweite horizontale Abschnitt 45 liegt also tiefer, als der erste horizontale Abschnitt 41 der Falle 40. Demnach ist auch der Einschnitt 46 tiefer angeordnet, als der horizontale Abschnitt 41. Im Bereich zwischen der Radgabel 16 und dem Lagergehäuse 21 erstreckt sich ein Vorsprung 24 entgegen der Schieberichtung des Transportwagens 1. Der Vorsprung 24 weist einen länglichen Durchbruch 23 auf, durch den der zylindrische Schaft 72 eines Rastteiles 71 nach oben ragt und im Einschnitt 46 der Falle 40 eingerastet ist. Mit seinem unteren Ende 73, das beispielsweise scheibenförmig gestaltet ist, liegt das Rastteil 71 auf der Lauffläche 19 des Rades 18 auf. Das Rastteil 71 und der Vorsprung 24 mit dem Durchbruch 23 bilden einen Rastmechanismus 70. Die Lenkrolle 15 ist in Nachlaufposition dargestellt. Das in Schieberichtung des Transportwagens 1 rollende Rad 18 (Pfeil) zieht das Rastteil 71 in Richtung Lagergehäuse 21. Der Schaft 72 des Rastteiles 71 ist im Einschnitt 46 der Falle 40 eingerastet. Die Lenkrolle 15 läßt sich nicht um die vertikale Achse 25 verschwenken. Dreht das Rad 18 zurück, wandert der Schaft 72 des Rastteiles 71 aus dem Einschnitt 46 heraus. Nun läßt sich die Lenkrolle 15 frei schwenken. Das Rastteil 71, der Durchbruch 23, sowie die Falle 40 bilden unter Einwirkung des Rades 18 eine lösbare Lenkarretierung 80.

In räumlicher Darstellung zeigt Fig. 3 die Falle 40, wie sie im Beispiel nach Fig. 2 Verwendung findet. Man erkennt die zum formschlüssigen und verdrehsicheren Anliegen der Falle 40 am Fahrgestell 3 die nach oben gerichteten Schenkel 43 nebst dem Durchbruch 42. Ebenso ist am zweiten horizontalen Abschnitt 45 der als offenes Langloch gestaltete Einschnitt 46 ersichtlich. Die Längserstreckung des Einschnittes 46 verläuft parallel zur Längserstreckung des Transportwagens 1. In Schieberichtung (Pfeil) oder Längserstreckung des Transportwagens 1 betrachet decken sich die senkrechte Mittelachse 47 des Einschnittes 46 und die senkrechte Mittelachse 48 des Durchbruches 42.

Im Sinne der Erfindung können beispielsweise Lenkrollen 15 jener Sorte Verwendung finden, wie sie z.B. in der EP 0 424 234 aufgeführt sind, ohne daß die in den Fig. 2 und 3 beschriebenen Fallen 40, geändert werden müßten. Dabei spielt es keine Rolle, daß im Gegensatz zu den vorab beschriebenen Lenkrollen 15, die in der genannte europäischen Patentschrift gezeigten Lagerkörper 32 von den Radgabeln 16 nicht von oben her umfaßt werden. Auch bei diesen Lenkrollen 15 lassen sich die Fallen 40 in gleicher, die Lenkrollen 15 übergreifenden Weise am Fahrgestell 3 befestigen. Auch lassen sich die mit Lenkarretierungen 80 ausgestatteten Lenkrollen 15 an der Vorderseite 4 der Transportwagen 1 anbringen, wobei natürlich die zugehörigen Fallen 40 ebenfalls entsprechend an der Vorderseite 4 der Transportwagen 1 angeordnet sein müssen.

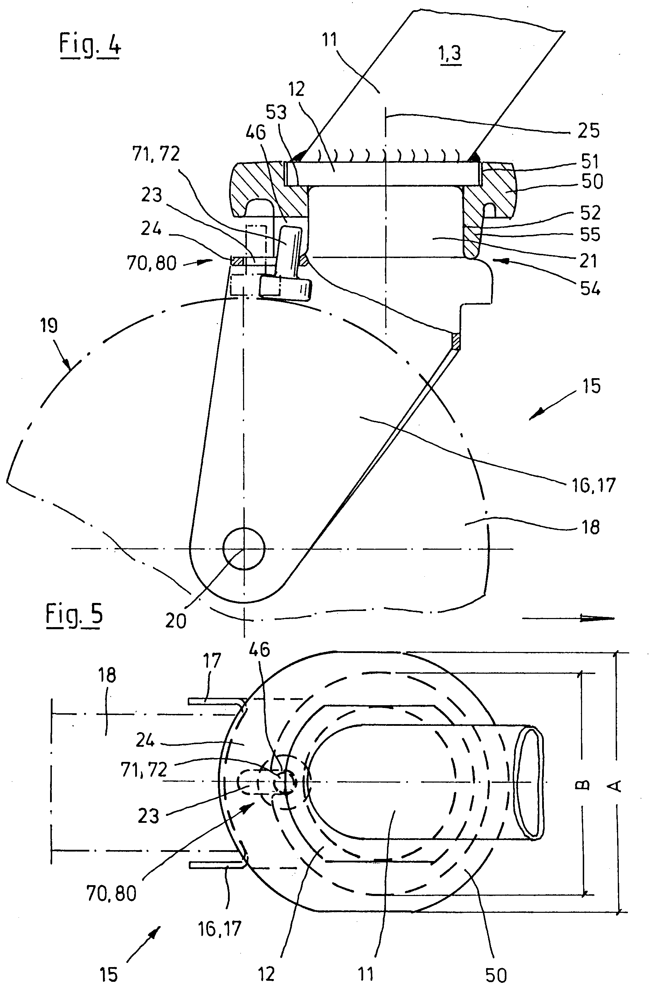

Das in den Figuren 4 und 5 dargestellte Detail zeigt das hintere Ende eines der beiden Längsholme 11, die einen Teil des Fahrgestelles 3 des Transportwagens 1 bilden. Jedes hintere Ende der Längsholme 11 schließt mit einer Platte 12 ab. An jeder Platte 12 ist ein ebenfalls bekannter Weise eine mit dem Rastmechanismus 70 zusammenwirkende Lenkrolle 15 angeschraubt und zwar so, daß sich die Radgabel 16 der Lenkrolle 15 um die vertikale Achse 25 verschwenken läßt. Die in der Zeichnung dargestellte Lenkrolle 15 entspricht in etwa jener Lenkrolle, wie sie durch die DE-PS 25 43 211.5 bekannt ist. Eine detaillierte Beschreibung dieser Lenkrolle 15 erübrigt sich deshalb. Jede Lenkrolle 15 ist mit einem Lagergehäuse 21 ausgestattet, an das sich die Radgabel 16 anschließt. Die Radgabel 16 trägt zwischen ihren Gabelschenkeln 17 in bekannter Weise ein auf einer horizontalen Achse 20 drehbar gelagertes Rad 18. Am Übergang zwischen dem Lagergehäuse 21 und der Radgabel 16 ist ein die Gabelschenkel 17 verbindender Vorsprung 24 angeformt. Der Vorsprung 24 weist einen in Laufrichtung der Lenkrolle 15 sich erstrekkenden länglichen Durchbruch 23 auf, in welchem der Schaft 72 eines Rastteiles 71 schiebebeweglich geführt ist. Das pilzförmig ausgebildete Rastteil 71 liegt mit seinem unteren Ende auf der Lauffläche 19 des Rades 18 auf. Durch Drehen des Rades 18 in die eine oder in die andere Richtung wird das Rastteil 71 in bekannter Weise im Durchbruch 23 hin und her bewegt. Der Schaft 72 des Rastteiles 71 ragt über den Vorsprung 24 nach oben hinaus und ist zum Eingriff in einen Einschnitt 46 einer Falle 50 dann bestimmt, wenn sich das Rad 18 in Schieberichtung des Transportwagens 1 -in der Zeichnung nach links- bewegt. Die Falle 50 ist eine Art haubenförmiges Teil, das von oben betrachtet rund oder unrund gestaltet ist. Letzteres ist in Fig. 5 dargestellt. Die Falle 50 weist an ihrem oberen Ende einen ersten Durchbruch 51 auf, dessen Umriss von oben betrachtet mit Spiel dem Umriss der Platte 12 entspricht. Der Umriss der Platte 12 ist unrund gestaltet, so daß sich die Falle 50 nicht um die vertikale Achse 25 verdrehen läßt. Die Falle 50 ist formschlüssig mit der Platte 12 verbunden. Nach unten schließt sich an den ersten Durchbruch 51 ein zweiter Durchbruch 52 an, der das Lagergehäuse 21 der Lenkrolle 15 formschlüssig umschließt, wobei die Falle 50 mit ihrer unteren Begrenzung 54 auf der Radgabel 16 und auf dem Vorsprung 24 aufliegt. Zwischen dem ersten und zweiten Durchbruch 51, 52 ist eine Schulter 53 gebildet, mit deren Hilfe sich die Falle 50 nach oben an der Unterseite der Platte 12 abstützt. Das Lagergehäuse 21 wird von einem im wesentlichen zylindrischen Schaft 55 der Falle 50 umschlossen, wobei sich im Schaft 55 der nach unten offene Einschnitt 46 befindet. In der Zeichnung ist das Rastteil 71 im Einschnitt 46 eingerastet. Die Lenkrolle 15 läßt sich in dieser Lage nicht um die vertikale Achse 25 verschwenken. Der Einschnitt 46 ist tiefer angeordnet, als die Schulter 53. Strichpunktiert ist in der Zeichnung jene Lage des Rastteiles 71 gezeigt, in der es sich nicht mit seinem Schaft 72 im Einschnitt 46 befindet, so daß sich die Lenkrolle 15 in diesem Falle um die vertikale Achse 25 verschwenken läßt. Die Breite des Einschnittes 46 ist nur geringfügig größer, als die Dicke des Schaftes 72 des Rastteiles 71, siehe Fig. 3.
Die bevorzugt als Kunststoffteil mit zähelastischen Eigenschaften hergestellte Falle 50 ist, wie in Fig. 3 ersichtlich, ähnlich wie bei an Einkaufswagen üblichen Abweisringen so gestaltet, daß sie mit einem Großteil ihres Umrisses den unterhalb des Lagergehäuses 21 befindlichen Uniriß der Lenkrolle 15 überdeckt. So ist die quer zur Laufrichtung (siehe Pfeil) des Rades 18 gemessene Breite A oder Durchmesser einer jeden Falle 50 größer, als die quer zur Laufrichtung eines Rades 18 gemessene Breite B einer jeden Lenkrolle 15, die mit dem Rastmechanismus 70 zusammenwirkt, wobei jeder Rastmechanismus 70 bzw. jede Lenkarretierung 80 zumindest durch die Teile 24, 23, 50, 12, 46, 71, 72, 18 und 19 gebildet ist. Dadurch, daß die Breite A einer jeden Falle 50 größer ist, als die Breite B einer jeden Lenkrolle 15, sind die Fallen 50 imstande, auch die Funktion von Stoßdämpfern auszuüben. Durch die neuheitsgemäße Lösung wird pro entsprechender Lenkrolle 15 je ein separater als Stoßdämpfer wirkender Abweisring, wie er bisher üblich war, eingespart. Falle 50 und Stoßdämpfer (bisheriger Abweisring) sind ein Teil.

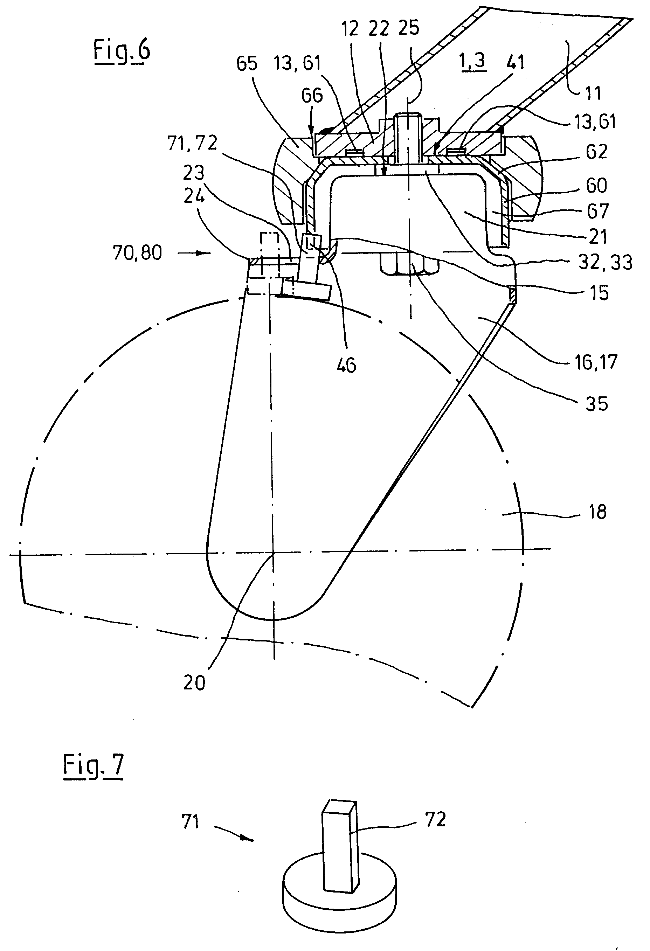

Das in Fig. 6 dargestellte Detail zeigt das hintere Ende eines der beiden Längsholme 11, die einen Teil des Fahrgestelles 3 des Transportwagens 1 bilden. Jedes hintere Ende der Längsholme 11 schließt mit einer Platte 12 ab. An jeder Platte 12 ist in ebenfalls bekannter Weise eine mit dem Rastmechanismus 70 zusammenwirkende Lenkrolle 15 angeschraubt und zwar so, daß sich die Radgabel 16 der Lenkrolle 15 um die vertikale Achse 25 verschwenken läßt. Die in der Zeichnung dargestellte Lenkrolle 15 entspricht in etwa jener Lenkrolle, wie sie durch die DE-PS 25 43 211.5 bekannt ist. Eine detaillierte Beschreibung dieser Lenkrolle 15 erübrigt sich deshalb. Jede Lenkrolle 15 ist mit einem Lagergehäuse 21 ausgestattet, an das sich die Radgabel 16 anschließt. Die Radgabel 16 trägt zwischen ihren Gabelschenkeln 17 in bekannter Weise ein auf einer horizontalen Achse 20 drehbar gelagertes Rad 18. Am Übergang zwischen dem Lagergehäuse 21 und der Radgabel 16 ist ein die Gabelschenkel 17 verbindender Vorsprung 24 angeformt. Der Vorsprung 24 weist einen in Laufrichtung der Lenkrolle 15 sich erstreckenden länglichen Durchbruch 23 auf, in welchem der Schaft 72 eines Rastteiles 71 schiebebeweglich geführt ist. Das etwa pilzförmig ausgebildete Rastteil 71 liegt mit seinem unteren Ende auf der Lauffläche 19 des Rades 18 auf. Durch Drehen des Rades 18 in die eine oder in die andere Richtung wird das Rastteil 71 in bekannter Weise im Durchbruch 23 hin und her bewegt. Der Schaft 72 des Rastteiles 71 ragt über den Vorsprung 24 nach oben hinaus und ist zum Eingriff in einen Einschnitt 46 einer Falle 60 dann bestimmt, wenn sich das Rad 18 in Schieberichtung des Transportwagens 1 - in der Zeichnung nach links - bewegt. Die Falle 60 ist eine Art haubenförmiges Teil, das von oben betrachtet zylindrisch gestaltet, sowie zentrisch zur vertikalen Achse 25 angeordnet ist und zwei nach oben gerichtete Vorsprünge 61 aufweist, die formschlüssig in entsprechende Vertiefungen 13 der ortsfesten Platte 12 eingreifen, so daß sich die Falle 60 nicht verdrehen läßt. Die aus metallischen Material gefertigte Falle 60 stützt sich nach unten am feststehenden Abschnitt 33 des Lagerkörpers 32 der Lenkrolle 15 ab. Nach oben liegt die Falle 60 an der Unterseite der Platte 12 des Fahrgestelles 3 an, wobei in montiertem Zustand der Lenkrolle 15 die Falle 60 zwischen dem Lagerkörper 32 und der Platte 12 ortsfest und verdrehsicher von einer Schraube 35 eingespannt ist, die von unten her auf der vertikalen Achse 25 angeordnet den feststehenden Abschnitt 33 des Lagerkörpers 32 durchdringt und mit der Platte 12 verschraubt ist. In der Zeichnung erkennt man den Einschnitt 46, der nach unten offen an der vertikalen zylindrischen Mantelfläche der Falle 60 vorgesehen ist und in den das Rastteil 71 mit seinem Schaft 72 eingerastet ist. In dieser Lage läßt sich die Lenkrolle 15 nicht verschwenken. Der Einschnitt 46 ist tiefer angeordnet, als der horizontale Abschnitt 41 der Falle 60. In strichpunktierter Darstellung ist das Rastteil 71 in jener Lage eingezeichnet, in der es mit der Falle 60 nicht verrastet ist. Die Lenkrolle 15 läßt sich in dieser Lage um die vertikale Achse 25 verschwenken. Die Falle 60 weist in vorteilhafter Weise einen kegelartigen koaxialen zylindrischen Abschnitt 62 auf, auf dem sich ein aus elastischem Material gefertigter zylindrischer Stoßfänger 65 abstützt. Der Stoßfänger 65 stützt sich ferner mit einer ringförmigen Schulter 66 an der ebenfalls zylindrischen Platte 12 ab. Der Innendurchmesser der Falle 60 ist so gewählt, daß zwischen dem zylindrischen Lagergehäuse 21 und der Falle 60 ein zylindrischer Zwischenraum 67 gebildet ist, der sich auch über die obere Begrenzungsfläche 22 des Lagergehäuses 21 nach oben erstreckt. Letzteres wird dadurch erreicht, daß die für die Falle 60 vorgesehene Abstützfläche am Lagerkörper 32 höher angeordnet ist, als die obere horizontale Begrenzungsfläche 22 des Lagergehäuses 21.

Wie in Fig. 7 ersichtlich, ist es zweckmäßig, dem Schaft 72 des Rastteiles 71 einen rechteckigen Querschnitt zu verleihen, damit dieser im langlochartigen Durchbruch 23 geradlinig in der jeweiligen Laufrichtung des Rades 18 hin- und herbewegbar ist. Der Durchbruch 23 besitzt dafür zwei parallel angeordnete und in Laufrichtung des Rades 18 sich erstreckende Flanken, an denen der Schaft 72 des Rastteiles 71 beim Drehen des Rades flächig entlanggleitet. Das Rastteil 71 ist bevorzugt aus metallischem Material, z.B. aus Stahl, gefertigt.

Da nicht alle am Transportwagen 1 angeordneten Lenkrollen 15 mit einem Rastmechanismus 70 ausgestattet sind, die mit einer Lenkarretierung 80 zusammenwirken, sind die Radgabeln 16 aller Lenkrollen 15 in zweckmäßiger Weise immer mit einem länglichen Durchbruch 23 zur eventuellen Aufnahme eines Rastteiles 71 ausgestattet. Ist eine Lenkarretierung 80 gewünscht, braucht bei der Montage der infragekommenden Lenkrollen 15 nur das Rastteil 71 eingelegt und zusätzlich eine Falle 40, 50, 60 vorgesehen werden.

## Patentansprüche

1. Von Hand bewegbarer Transportwagen (1), mit einem Fahrgestell (3), das an seiner Vorderseite (4) wenigstens eine Lenkrolle (15) und an seiner Rückseite (5) zwei Lenkrollen (15) trägt, wobei jede Lenkrolle (15) mit einer Radgabel (16) ausgestattet ist, die ein um eine horizontale Achse (20) drehbares Rad (18) aufweist, und jede Radgabel (16) um eine vertikale Achse (25) drehbar mit einem einer jeden Lenkrolle (15) angehörenden, zum Befestigen am Transportwagen (1) vorgesehenen Lagerkörper (32) verbunden ist, wobei entweder die wenigstens eine an der Vorderseite (4) oder die an der Rückseite (5) des Fahrgestelles (3) angeordneten Lenkrollen (15) durch je eine lösbare Lenkarretierung (80) beeinflußbar sind und zu diesem Zweck jede dieser Lenkrollen (15) mit einem an der Radgabel (16) angeordneten, ein Rastteil (71) aufweisenden Rastmechanismus (70) ausgestattet ist und diese Rastmechanismen (70) auf die wechselnde Laufrichtung der Räder (18) reagieren und jedes Rastteil (71) in einer ihm zugeordneten Falle (40, 50, 60) dann lösbar eingerastet ist, wenn sich die Räder (18) in Schieberichtung des Transportwagens (1) bewegen, dadurch **gekennzeichnet,** daß jede Falle (40, 50, 60) als eigenständiges Teil und gegen Verdrehen gesichert lösbar am Fahrgestell (3) abgestützt ist

2. Transportwagen nach Anspruch 1, dadurch **gekennzeichnet,** daß die Fallen (40, 50, 60) zwischen dem Fahrgestell (3) und den Lenkrollen (15) angeordnet sind.

3. Transportwagen nach Anspruch 1 und/oder 2, dadurch **gekennzeichnet,** daß die Fallen (40, 50, 60) zwischen dem ortsfest befestigten Lagerkörper (32) der Lenkrollen (15) und der Unterseite des Fahrgestelles (3) angeordnet sind.

4. Transportwagen nach wenigstens einem der Ansprüche 1 bis 3, dadurch **gekennzeichnet,** daß die Fallen (40, 50, 60) mit den zum Befestigen der Lenkrollen (15) bestimmten Befestigungsmitteln am Fahrgestell (3) befestigbar sind.

5. Transportwagen nach wenigstens einem der Ansprüche 1 bis 4, dadurch **gekennzeichnet,** daß der an jeder Falle (40, 50, 60) befindliche, für das Rastteil (71) vorgesehene Einschnitt (46) tiefer liegt, als der zur Befestigung der Falle (40, 50, 60) erforderliche horizontale Abschnitt (41) oder die Schulter (53).

6. Transportwagen nach wenigstens einem der Ansprüche 1 bis 5, dadurch **gekennzeichnet,** daß sich in Schieberichtung oder in Längsrichtung des Transportwagens (1) betrachtet die senkrechten Mittelachsen (47, 48) des Einschnittes (46) und des Durchbruches (42) einer jeden Falle (40) überdecken.

7. Transportwagen nach wenigstens einem der Ansprüche 1 bis 6, dadurch **gekennzeichnet,** daß die Fallen (50) aus elastischem Material gefertigt und als Stoßfänger (65) vorgesehen sind.

8. Transportwagen nach wenigstens einem der Ansprüche 1 bis 7, dadurch **gekennzeichnet,** daß jede Falle (50, 60) formschlüssig mit einer der als Anschraubstellen vorgesehenen, am Fahrgestell (3) befindlichen Platten (12) abgestützt ist.

9. Transportwagen nach wenigstens einem der Ansprüche 1 bis 8, dadurch **gekennzeichnet,** daß jede Falle (50) mit einer Schulter (53) an der Unterseite einer der Platten (12) abgestützt ist.

10. Transportwagen nach wenigstens einem der Ansprüche 1 bis 9, dadurch **gekennzeichnet,** daß jede Falle (50) das Lagergehäuse (21) einer der Lenkrollen (15) formschlüssig umschließt.

11. Transportwagen nach wenigstens einem der Ansprüche 1 bis 10, dadurch **gekennzeichnet,** daß jede Falle (50) mit ihrer unteren Begrenzung (54) auf der Radgabel (16) und dem Vorsprung (24) einer der Lenkrollen (15) aufliegt.

12. Transportwagen nach wenigstens einem der Ansprüche 1 bis 11, dadurch **gekennzeichnet,** daß jede Falle (50) einen Schaft (55) aufweist, in dem sich der zur Aufnahme des Schaftes (72) eines Rastteiles (71) bestimmte Einschnitt (46) befindet.

13. Transportwagen nach wenigstens einem der Ansprüche 1 bis 12, dadurch **gekennzeichnet,** daß jede Falle (50) mit einem Großteil ihres Umrisses den unterhalb des Lagergehäuses (21) befindlichen Umriss einer Lenkrolle (15) überdeckt.

14. Transportwagen nach wenigstens einem der Ansprüche 1 bis 13, dadurch **gekennzeichnet,** daß die quer zur Laufrichtung des Rades (18) gemessene Breite (A) einer jeden Falle (50) größer ist, als die quer zur Laufrichtung des Rades (18) gemessene Breite (B) einer Lenkrolle (15)

15. Transportwagen nach wenigstens einem der Ansprüche 1 bis 14, dadurch **gekennzeichnet,** daß jede Falle (50) von oben betrachtet rund oder unrund ist.

16. Transportwagen nach wenigstens einem der Ansprüche 1 bis 15, dadurch **gekennzeichnet,** daß jede Falle (60) eine zylindrische Form besitzt, sich am feststehenden Abschnitt (33) des Lagerkörpers (32) der Lenkrolle (15) abstützt und das Lagergehäuse (21) so umgreift, daß ein Zwischenraum (67) zwischen dem Lagergehäuse (21) und der Falle (60) gebildet ist.

17. Transportwagen nach wenigstens einem der Ansprüche 1 bis 16, dadurch **gekennzeichnet,** daß jede Falle (60) einen kegelartigen, koaxialen zylindrischen Abschnitt (62) aufweist, der zum Abstützen eines Stoßfängers (65) bestimmt ist.

18. Transportwagen nach wenigstens einem der Ansprüche 1 bis 17, dadurch **gekennzeichnet,** daß der Schaft (72) der Rastteile (71) einen rechteckigen Querschnitt aufweist.

19. Transportwagen nach wenigstens einem der Ansprüche 1 bis 18, dadurch **gekennzeichnet,** daß die Lagerkörper (32) der von den Lenkarretierungen (80) beeinflußten Lenkrollen (15) von den Radgabeln (16) von oben her umfaßt sind.

## Claims

1. A hand-driven transporting trolley (1), having a sub-frame (3) supporting at least one caster (15) at its front (4) and two casters (15) at its rear (5), each caster (15) being provided with a wheel fork (16) having a wheel (18) rotatable about a horizontal axis (20), and each wheel fork (16) being connected to a support member (32) in a manner so as to be rotatable about a vertical axis (25), each of the casters (15) being associated with a respective support member (32) provided for the purpose of mounting on the transporting trolley (1), either the at least one caster (15) arranged at the front (4) of the sub-frame (3) or the casters (15) arranged at the rear (5) of the sub-frame (3) being able to be acted upon by a respective releasable steering lock (80) and for this purpose each of these casters (15) being provided with a locking mechanism (70) which is arranged on the wheel fork (16) and has a locking part (71), and these locking mechanisms (70) reacting to the changing direction of travel of the wheels (18) and each locking pail (71) being releasably locked in an associated catch (40, 50, 60) when the wheels (18) are moving in the advancing direction of the transporting trolley (1), characterised in that each catch (40, 50, 60) is detachably supported on the sub-frame (3) as an independent part secured against rotation.

2. A transporting trolley in accordance with Claim 1, characterised in that the catches (40, 50, 60) are arranged between the sub-frame (3) and the casters (15).

3. A transporting trolley in accordance with Claim 1 and/or 2, characterised in that the catches (40, 50, 60) are arranged between the fixedly secured support member (32) of the casters (15) and the underside of the sub-frame (3).

4. A transporting trolley in accordance with at least one of Claims 1 to 3, characterised in that the catches (40, 50, 60) are securable to the sub-frame (3) by means of the securing means for securing the casters (15).

5. A transporting trolley in accordance with at least one of Claims 1 to 4, characterised in that the slot (46) for the locking part (71), located in each catch (40, 50, 60), lies at a lower level than the horizontal portion (41) required to secure the catch (40, 50, 60) or than the shoulder (53).

6. A transporting trolley in accordance with at least one of Claims 1 to 5, characterised in that viewed in the advancing direction or longitudinal direction of the transporting trolley (1), the perpendicular central axes (47, 48) of the slot (46) and the opening (42) of each catch (40) overlap.

7. A transporting trolley in accordance with at least one of Claims 1 to 6, characterised in that the catches (50) are manufactured from a resilient material and are provided as bumpers (65).

8. A transporting trolley in accordance with at least one of Claims 1 to 7, characterised in that each catch (50, 60) is supported in a positive locking manner by means of one of the plates (12) which are located on the sub-frame (3) and are provided as mounting sites.

9. A transporting trolley in accordance with at least one of Claims 1 to 8, characterised in that each catch (50) is supported against the underside of one of the plates (12) by means of a shoulder (53).

10. A transporting trolley in accordance with at least one of Claims 1 to 9, characterised in that each catch (50) surrounds the bearing housing (21) of one of the casters (15) in a positive locking manner.

11. A transporting trolley in accordance with at least one of Claims 1 to 10, characterised in that the lower boundary (54) of each catch (50) rests on the wheel fork (16) and the projection (24) of one of the casters (15).

12. A transporting trolley in accordance with at least one of Claims 1 to 11, characterised in that each catch (50) has a shaft (55) in which there is located the slot (46) for receiving the shaft (72) of a locking part (71).

13. A transporting trolley in accordance with at least one of Claims 1 to 12, characterised in that the greater part of the profile of each catch (50) overlaps the caster profile located beneath the bearing housing (21).

14. A transporting trolley in accordance with at least one of Claims 1 to 13, characterised in that the width (A) of each catch (50) measured transversely to the direction of travel of the wheel (18) is greater than the width (B) of a caster (15) measured transversely to the direction of travel of the wheel (18).

15. A transporting trolley in accordance with at least one of Claims 1 to 14, characterised in that each catch (50) is circular or non-circular in plan view.

16. A transporting trolley in accordance with at least one of Claims 1 to 15, characterised in that each catch (60) has a cylindrical form, is supported on the stationary portion (33) of the support member (32) of the caster (15) and surrounds the bearing housing (21) in such a manner that a space (67) is formed between the bearing housing (21) and the catch (60).

17. A transporting trolley in accordance with at least one of Claims 1 to 16, characterised in that each catch (60) has a tapered, coaxial, cylindrical portion (62) for supporting a bumper (65).

18. A transporting trolley in accordance with at least one of Claims 1 to 17, characterised in that the shaft (72) of the locking parts (71) has a rectangular cross-section.

19. A transporting trolley in accordance with at least one of Claims 1 to 18, characterised in that the support members (32) of the casters (15) acted upon by the steering locks (80) are embraced from above by the wheel forks (16).

## Revendications

1. Chariot de transport (1) déplaçable à la main, avec un châssis (3) qui porte au moins une roue de guidage (15) sur son côté avant (4) et deux roues de guidage (15) sur son côté arrière (5), chaque roue de guidage (15) étant équipée d'une fourche de roue (16) qui présente une roue (18) rotative autour d'un axe horizontal (20), et chaque fourche de roue (16) étant assemblée, à rotation autour d'un axe vertical (25), à un corps de palier (32) faisant partie de chaque roue de guidage (15) et prévu pour la fixation sur le chariot de transport (1), soit la ou les roues de guidage (15) disposées sur le côté avant (4), soit les roues de guidage (15) disposées sur le côté arrière (5) du châssis (3) pouvant être soumises à l'action d'un blocage de direction libérable respectif (80) et, à cet effet, chacune de ces roues de guidage (15) étant équipée d'un mécanisme de crantage (70) disposé sur la fourche de roue (16) et présentant un élément de crantage (71), et ces mécanismes de crantage (70) réagissant au sens alternatif de déplacement des roues (18) et chaque élément de crantage (71) étant enclenché de façon libérable dans un organe de piégeage associé (40, 50, 60) lorsque les roues (18) se déplacent dans le sens de poussée du chariot de transport (1), **caractérisé** en ce que chaque organe de piégeage (40, 50, 60) est soutenu de façon amovible contre le châssis (3) en tant qu'élément indépendant et en étant bloqué en rotation.

2. Chariot de transport selon la revendication 1, **caractérisé** en ce que les organes de piégeage (40, 50, 60) sont disposés entre le châssis (3) et les roues de guidage (15).

3. Chariot de transport selon la revendication 1 et/ou 2, **caractérisé** en ce que les organes de piégeage (40, 50, 60) sont disposés entre le corps de palier (32), stationnairement fixé, des roues de guidage (15) et le dessous du châssis (3).

4. Chariot de transport selon au moins une des revendications 1 à 3, **caractérisé** en ce que les organes de piégeage (40, 50, 60) peuvent être fixés sur le châssis (3) avec les moyens de fixation prévus pour fixer les roues de guidage (15).

5. Chariot de transport selon au moins une des revendications 1 à 4, **caractérisé** en ce que la découpure (46) présente sur chaque organe de piégeage (40, 50, 60), prévue pour l'élément de crantage (71), se trouve plus bas que l'épaulement (53) ou la partie horizontale (41) nécessaire pour la fixation de l'organe de piégeage (40, 50, 60)

6. Chariot de transport selon au moins une des revendications 1 à 5, **caractérisé** en ce que, considérés dans le sens de poussée ou dans la direction longitudinale du chariot de transport (1), les axes médians verticaux (47, 48) de la découpure (46) et du percement (42) de chaque organe de piégeage (40) se superposent.

7. Chariot de transport selon au moins une des revendications 1 à 6, **caractérisé** en ce que les organes de piégeage (50) sont réalisés en matériau élastique et sont prévus comme pare-chocs (65).

8. Chariot de transport selon au moins une des revendications 1 à 7, **caractérisé** en ce que chaque organe de piégeage (50, 60) est soutenu en engagement positif par une des plaques (12) prévues comme points de boulonnage qui se trouvent sur le châssis (3).

9. Chariot de transport selon au moins une des revendications 1 à 8, **caractérisé** en ce que chaque organe de piégeage (50) est soutenu par un épaulement (53) contre le dessous d'une des plaques (12).

10. Chariot de transport selon au moins une des revendications 1 à 9, **caractérisé** en ce que chaque organe de piégeage (50) entoure en engagement positif le logement de palier (21) d'une des roues de guidage (15).

11. Chariot de transport selon au moins une des revendications 1 à 10, **caractérisé** en ce que chaque organe de piégeage (50) repose par sa délimitation inférieure (54) sur la fourche de roue (16) et la partie saillante (24) d'une des roues de guidage (15).

12. Chariot de transport selon au moins une des revendications 1 à 11, **caractérisé** en ce que chaque organe de piégeage (50) présente un corps (55) dans lequel se trouve la découpure (46) destinée à recevoir la tige (72) d'un élément de crantage (71).

13. Chariot de transport selon au moins une des revendications 1 à 12, **caractérisé** en ce que chaque organe de piégeage (50) recouvre par la majeure partie de son contour le contour, situé en dessous du logement de palier (21), d'une roue de guidage (15).

14. Chariot de transport selon au moins une des revendications 1 à 13, **caractérisé** en ce que la largeur (A), mesurée transversalement au sens de déplacement de la roue (18), de chaque organe de piégeage (50) est supérieure à la largeur (B), mesurée transversalement au sens de déplacement de la roue (18), d'une roue de guidage (15).

15. Chariot de transport selon au moins une des revendications 1 à 14, **caractérisé** en ce que chaque organe de piégeage (50) est, vu de dessus, rond ou ovale.

16. Chariot de transport selon au moins une des revendications 1 à 15, **caractérisé** en ce que chaque organe de piégeage (60) possède une forme cylindrique, s'appuie contre la partie fixe (33) du corps de palier (32) de la roue de guidage (15) et entoure le logement de palier (21) de telle sorte qu'un espace intermédiaire (67) est formé entre le logement de palier (21) et l'organe de piégeage (60).

17. Chariot de transport selon au moins une des revendications 1 à 16, **caractérisé** en ce que chaque organe de piégeage (60) présente une partie cylindrique (62) coaxiale et conique, qui est destinée à soutenir un parechocs (65).

18. Chariot de transport selon au moins une des revendications 1 à 17, **caractérisé** en ce que la tige (72) des éléments de crantage (71) présente une section rectangulaire.

19. Chariot de transport selon au moins une des revendications 1 à 18, **caractérisé** en ce que les corps de palier (32) des roues de guidage (15) sur lesquelles agissent les blocages de direction (80) sont entourés par le haut par les fourches de roue (16).
